# EUROPÄISCHE PATENTSCHRIFT

(11) **EP 1 149 717 B1**
(45) Veröffentlichungstag und Bekanntmachung des Hinweises auf die Patenterteilung: **18.09.2002**
(21) Anmeldenummer: 00108735.2
(22) Anmeldetag: 22.04.2000
(51) Int. Cl.: B60H 1/00, B62D 25/14, B60K 37/00

(54) **Instrumententafelträger**
Instrument panel support
Support de tableau de bord

(43) Veröffentlichungstag der Anmeldung: 31.10.2001
(73) Patentinhaber: BENTELER AG, D-33104 Paderborn (DE)
(72) Erfinder: Krogmeier, Jürgen, 33161 Hövelhof (DE); Hitz, Andreas, 59597 Erwitte (DE); Garcia, Rafael, 33104 Paderborn (DE); Härtel, Wulf, 33184 Altenbeken (DE)
(74) Vertreter: Bockermann, Rolf, Dipl.-Ing.

(56) Entgegenhaltungen:
- EP-A- 0 907 061
- DE-A- 19 534 568
- DE-A- 19 620 919
- DE-U- 29 916 467

## Beschreibung

Die Erfindung betrifft einen Instrumententafelträger für einen Personenkraftwagen gemäß den Merkmalen im Oberbegriff von Anspruch 1.

Instrumententafelträger erstrecken sich bei einem Personenkraftwagen zwischen den A-Säulen quer zur Fahrtrichtung. In konventioneller Bauweise besteht ein Instrumententafelträger im wesentlichen aus einem Tragprofil, z.B. einem Rohr, wie es aus der DE 196 20 919 A1 bekannt ist. Im Bereich des Cockpits sind am Instrumententafelträger diverse Halterungen angeordnet für die Instrumententafel selber sowie zur Halterung bzw. Befestigung weiterer Fahrzeugkomponenten, wie Heizungs- oder Klimaanlage, Airbag, Lenksäule, Mittelkonsole, Sicherungskasten, Handschuhfach.

Bei der bekannten Bauart besteht die Instrumententafel aus mindestens zwei um den Instrumententafelträger angeordneten Bauteilen, die als geschäumte Kunststoffformteile ausgebildet sind. Diese weisen Ausnehmungen auf zur Aufnahme von einzusetzenden Komponenten, insbesondere der Komponenten einer Heizungs- oder Klimaanlage. Ferner sind in der Instrumententafel Luftführungen vorgesehen, wobei die Luft durch Lufteinlässe im Bereich der Mittelkonsole zu Luftauslässen in den fahrer- und beifahrerseitigen Bereich der Instrumententafel sowie der Front- und Seitenscheibe geleitet wird. Trotz der an sich kompakten Bauweise nimmt die Instrumententafel ein vergleichsweise großes Bauvolumen ein.

Aus der EP 0 907 061 A2 ist ein Wärmeübertrager für eine Heiz- oder Klimaanlage eines Kraftfahrzeugs bekannt. Der Wärmeübertrager weist Führungskanäle für das Heiz- oder Kühlmedium auf, die durch mehrere durch Stege voneinander getrennte Kammern eines Strangpressprofils in der Form eines Flachrohrs gebildet sind. Angrenzend an die Kammern sind nach außen abstehende Rippen vorgesehen, die durch einen Außenmantel als Strömungskanäle für die zu temperierende Luft ausgebildet werden. Seitlich an die äußersten Kammern des Strangpressprofils grenzen Rohre an, die als Zuund Ablauf für das Heiz- oder Kühlmedium vorgesehen sind.

Durch das DE 299 16 467 U1 zählt ein Instrumententafelträger zum Stand der Technik aus einem Tragprofil mit einer integrierten Luftführung. Das Tragprofil ist in zumindest mittelbar miteinander verbundene Längsabschnitte gegliedert, die konfigurativ und werkstoffmäßig auf die Beanspruchungen auf der Fahrerseite und der Beifahrerseite abgestimmt sind. Hierdurch kann die Steifigkeit des Instrumententafelträgers bei leichter und einfacherer Gestaltung verbessert werden.

Grundsätzlich muss der Instrumententafelträger verschiedene Funktionen erfüllen. Er dient neben der Versteifung der Karosserie zur Energieaufnahme im Crashfall und zum Verbinden verschiedener Raumpunkte bzw. zur Festlegung der diversen Halter. Ferner muss er für den Betrieb in unterschiedlichsten Frequenzbereichen geeignet sein.

Im Bestreben einer innovativen Weiterentwicklung von Kraftfahrzeugkonzeptionen liegt der Erfindung ausgehend vom Stand der Technik die Aufgabe zugrunde, einen Instrumententafelträger funktionell zu verbessern, wodurch ein Raumgewinn im Cockpitbereich eines Personenkraftwagens und eine Steigerung des Fahrgastkomforts erreicht wird.

Die Lösung dieser Aufgabe besteht nach der Erfindung in einem Instrumententafelträger gemäß den Merkmalen von Anspruch 1.

Kernpunkt der Erfindung bildet die Maßnahme, dass die Luftführung des Tragprofils zumindest einen Teil des Wärmetauschers der Klimaanlage des Personenkraftwagens bildet. In die Luftführung ist wenigstens eine ein Wärmetauschermedium führende Wärmetauscherleitung eingegliedert. Der Wärmetauscher komplett oder zumindest Teilkomponenten hiervon, nämlich die Wärmetauscherleitungen und zugehörige Komponenten (z.B. Ventilator) sind erfindungsgemäß in die Luftführung innerhalb des Tragprofils des Instrumententafelträgers integriert.

Durch Verlagerung des Wärmetauschers bzw. Komponenten hiervon in den Instrumententafelträger wird eine Vergrößerung des Fußraums für Fahrer und Beifahrer erreicht. Ferner ist eine separate Beheizung bzw. Klimatisierung der Fahrer- und Beifahrerseite technisch vorteilhaft realisierbar. Luftführung, Kühlung und Heizung werden zu einer komplexen Baueinheit im Tragprofil vereint.

Zweckmäßigerweise ist die Luftführung in mehrere Längskanäle unterteilt, in welche Wärmetauscherleitungen integriert sind, wie dies Anspruch 2 vorsieht, Auf diese Weise sind verschiedene Varianten zur Integration von Kühlmittelleitungen und Heizwasserleitungen möglich. Die Auslegung kann den jeweiligen Modellen entsprechend erfolgen und hinsichtlich des zur Verfügung stehenden Bauvolumens angepasst werden.

Eine Steigerung der Wärmetauscherleistung wird durch die Merkmale des Anspruchs 3 erreicht. Danach sind die Wärmetauscherleitungen mit Wärmetauscherflächen versehen, durch die ihre Oberfläche vergrößert wird. Denkbar sind beispielsweise Rippen oder Lamellen, die in den Strömungsraum der Luftführung ragen. Hierdurch wird die Wärmeübergangsfläche vergrößert, so dass ein effizienter Wärmetausch gewährleistet ist. Die Wärmetauscherflächen (Rippen, Lamellen) können zudem zur Versteifung der Wärmetauscherleitung im Tragprofil genutzt werden.

Nach den Merkmalen des Anspruchs 4 ist das Tragprofil in zwei Längenabschnitte unterteilt, die durch ein Kopplungsstück miteinander verbunden sind. Über das Mittelstück kann eine Luftleitung und -verteilung in verschiedene Ebenen oder Segmente der Luftführung innerhalb des Tragprofils erfolgen.

Das Tragprofil ist mit den A-Säulen relativ bewegbar gekoppelt (Anspruch 5). Dies ermöglicht einen Toleranzausgleich des Instrumententafelträgers zu den A-Säulen innerhalb der Frontanordnung des Cockpits. Insbesondere lässt diese Ausgestaltung einen Ausgleich in Längsrichtung des Tragprofils zu. In diesem Zusammenhang ist eine besonders vorteilhafte Ausführungsform in den Merkmalen des Anspruchs 6 zu sehen. Danach ist das Tragprofil mit seinen Enden unter Eingliederung von Dichtungen in A-Säulenhaltern relativ bewegbar lageorientiert.

Zur Gewährleistung eines langen Kontakts der Luft mit den wirksamen Wärmetauscherflächen innerhalb der Luftführung ist nach den Merkmalen des Anspruchs 7 vorgesehen, dass der Luftführung Mittel zur Erzeugung eines wendelförmigen Luftstroms um die Wärmetauscherleitung bzw. -leitungen zugeordnet sind. Diese Maßnahme trägt zu einer Effizienzsteigerung des Wärmeübergangs bei.

Schließlich ist nach Anspruch 8 vorgesehen, dass der Luftführung ein Kondensatablauf zugeordnet ist. Über diesen wird das anfallende Kondenswasser abgeführt.

Als zweckmäßig erscheint ferner eine antibakterielle Beschichtung der am Wärmetausch und der Luftführung beteiligten Oberflächen, wodurch einem Absetzen von Bakterien auf diesen Flächen entgegengewirkt und ein Einströmen in den Passantenraum vermieden werden kann.

Die Erfindung ist nachfolgend anhand von in den Zeichnungen dargestellten Ausführungsbeispielen näher erläutert. Es zeigen:
- Figur 1: in der Ansicht eine erste Ausführungsform eines Instrumententafelträgers in Zweikreisluftverteiler-Bauweise;
- Figuren 2 bis 6: fünf Querschnittsdarstellungen durch einen Instrumententafelträger gemäß Figur 1 entlang der Linie A-A mit der Darstellung verschiedener Auslegungsvarianten;
- Figur 7: eine Schnittdarstellung durch den endseitigen Bereich eines Tragprofils mit der Darstellung eines A-Säulenhalters;
- Figur 8: in perspektivischer Darstellungsweise eine Prinzipdarstellung der Luftführung auf der Fahrer- bzw. Beifahrerseite;
- Figur 9: im Schema eine dreidimensionale Darstellung eines Instrumententafelträgers mit Lufteintritt und -austritt;
- Figur 10: eine weitere Ausführungsform eines Instrumententafelträgers;
- Figur 11: einen Ausschnitt aus einem Instrumententafelträger mit Luftverwirbelung;
- Figur 12: eine technisch vereinfachte Übersichtsdarstellung des Instrumententafelbereichs mit einem Instrumententafelträger in der Ausführungsform gemäß der Figur 11 in einer x-z-Ansicht und
- Figur 13: die Darstellung gemäß Figur 12 in der z-y-Ansicht.

Einander entsprechende Bauteile tragen in allen Zeichnungen die gleichen Bezugszeichen.

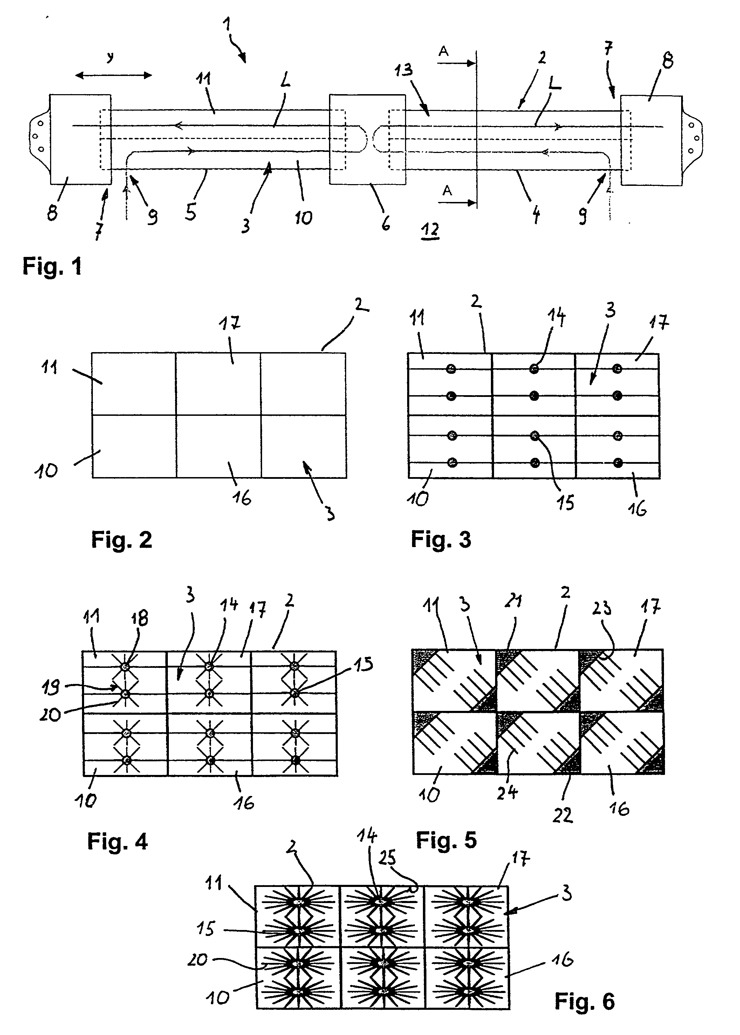

In der Figur 1 ist ein symmetrischer Instrumententafelträger 1 dargestellt in Zweikreisluftverteiler-Bauweise mit integrierter Kühlung und Heizung. Der Instrumententafelträger 1 erstreckt sich in einem Personenkraftwagen zwischen den hier nicht dargestellten A-Säulen quer zur Fahrtrichtung.

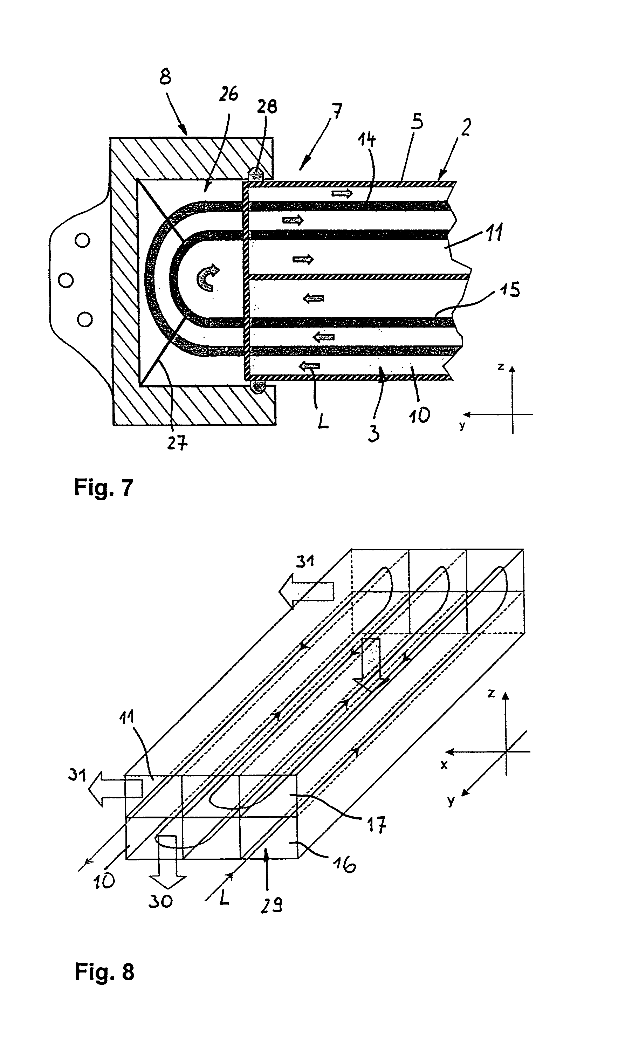

Der Instrumententafelträger 1 umfasst ein Tragprofil 2 mit hierin integrierter Luftführung 3. Das Tragprofil 2 ist in zwei Längenabschnitte 4, 5 unterteilt, die durch ein Kopplungsstück 6 miteinander verbunden sind. Die Enden 7 der Längenabschnitte 4, 5 sind in A-Säulenhaltern 8 relativ bewegbar eingegliedert (siehe hierzu auch Figur 7). Die Luftströmung ist durch die Pfeillinien L gekennzeichnet. Die Luft tritt über Lufteinlässe 9 in die Luftführung 3 ein, durchströmt einen ersten Längskanal 10 bis zum Kopplungsstück 6, wo die Luftströmung L umgelenkt wird und über einen zweiten Längskanal 11 in Richtung zu den A-Säulenhaltern 8 zurück strömt. Über hier nicht dargestellte Luftauslässe gelangt die auf dem Weg durch die Luftführung 3 klimatisierte Luft in den Fahrzeuginnenraum 12.

Die Luftführung 3 bildet zumindest einen Teil des Wärmetauschers 13 der Klimaanlage des Personenkraftwagens. In der Zusammenschau von Figur 1 und Figur 7 wird deutlich, dass hierzu Wärmetauscherleitungen 14, 15, die ein Wärmetauschermedium führen, in die Luftführung 3 eingegliedert sind. Über diese kann die Luft L auf dem Weg durch die Luftführung 3 im Tragprofil 2 klimatisiert, das heißt gekühlt oder erwärmt werden.

Durch die Verlagerung von Baukomponenten der Klimaanlage vom Fußraum des Personenkraftwagens in den Instrumententafelträger 1 kann die Beinfreiheit vergrößert oder der hierdurch gewonnene Bauraum für andere Fahrzeugkomponenten genutzt werden.

Die Figuren 2 bis 6 stellen im Querschnitt verschiedene Ausführungsformen der Luftführung 3 und hierin angeordneter Wärmetauscherleitungen 14, 15 dar.

Figur 2 zeigt ein Tragprofil 2, bei dem die Luftführung 3 in mehrere über- und nebeneinander liegende Längskanäle 10, 11; 16, 17 unterteilt ist. Durch die Längskanäle 10, 11; 16, 17 kann die Luft L in treppen- oder kaskadenförmiger Führung geleitet werden. Die Längskanäle 10, 11; 16, 17 nehmen Wärmetauscherleitungen 14, 15 auf, wie in den Figuren 3 bis 6 dargestellt, und zwar jeweils eine Wärmetauscherleitung 14 für die Kühlmittelführung und eine Wärmetauscherleitung 15 für die Wasserführung zu Heizzwecken.

Figur 3 zeigt die Ausführungsform eines Tragprofils 2, in dessen Luftführung 3 Glattrohre als Wärmetauscherleitungen 14, 15 eingegliedert sind. Bei der Variante gemäß Figur 4 weisen die Wärmetauscherleitungen 14, 15 ihre Oberfläche 18 vergrößernde Wärmetauscherflächen 19 in Form von auf dem Außenumfang angeordneten Längsrippen 20 bzw. Lamellen auf.

Bei dem in der Figur 5 dargestellten Tragprofil sind die Wärmetauscherleitungen 21, 22 in den Ecken der Luftführung 3 diametral gegenüber liegend angeordnet. Die Wärmetauscherleitungen 21, 22 sind durch in Längsrichtung in die Luftführung 3 eingegliederte Trennwände 23 gegenüber der Luftführung 3 getrennt. Von den Trennwänden 23 stehen radial gerichtete Rippen 24 ab.

Figur 6 gibt ein sternförmiges Profil der Wärmetauscherleitungen 14, 15 wieder, wobei sich die Wärmetauscherleitungen 14, 15 untereinander und an den Innenwänden 25 der Luftkanäle 10, 11; 16, 17 abstützen. Hierdurch wird eine Versteifung der Profile erreicht.

Aus der Darstellung der Figur 7 geht hervor, dass das Tragprofil 2 mit seinem Ende 7 in A-Säulenhaltern 8 relativ bewegbar gelagert ist.

Vor der Luftführung 3 erkennt man die Längskanäle 10, 11 mit den integrierten Wärmetauscherleitungen 14, 15. Die Wärmetauscherleitung 14 dient zur Kühlmittelführung, die Wärmetauscherleitung 15 ist Teil des Heizwasserkreislaufs. Die Luftströmung in der Luftführung 3 ist durch die Pfeile L verdeutlicht. Die Wärmetauscherleitungen 14, 15 ebenso wie die Luft L werden in einem Verteilerraum 26 des A-Säulenhalters 8 vom unteren Längskanal 10 in den oberen Längskanal 11 umgelenkt. Im Verteilerraum 26 sind die Wärmetauscherleitungen 14, 15 durch Haltestege 27 lageorientiert.

Man erkennt ferner, dass das Ende 7 des Tragprofils 2 im A-Säulenhalter 8 unter Eingliederung einer umlaufenden Dichtung 28 eingegliedert ist. Hierdurch wird der Übertritt von Luft nach außen unterbunden und gleichzeitig eine Relativbeweglichkeit des Tragprofils 2 im A-Säulenhalter 8 ermöglicht. Auf diese Weise ist ein Toleranzausgleich des Tragprofils 2 in y-Richtung gegeben (siehe hierzu auch Figur 1).

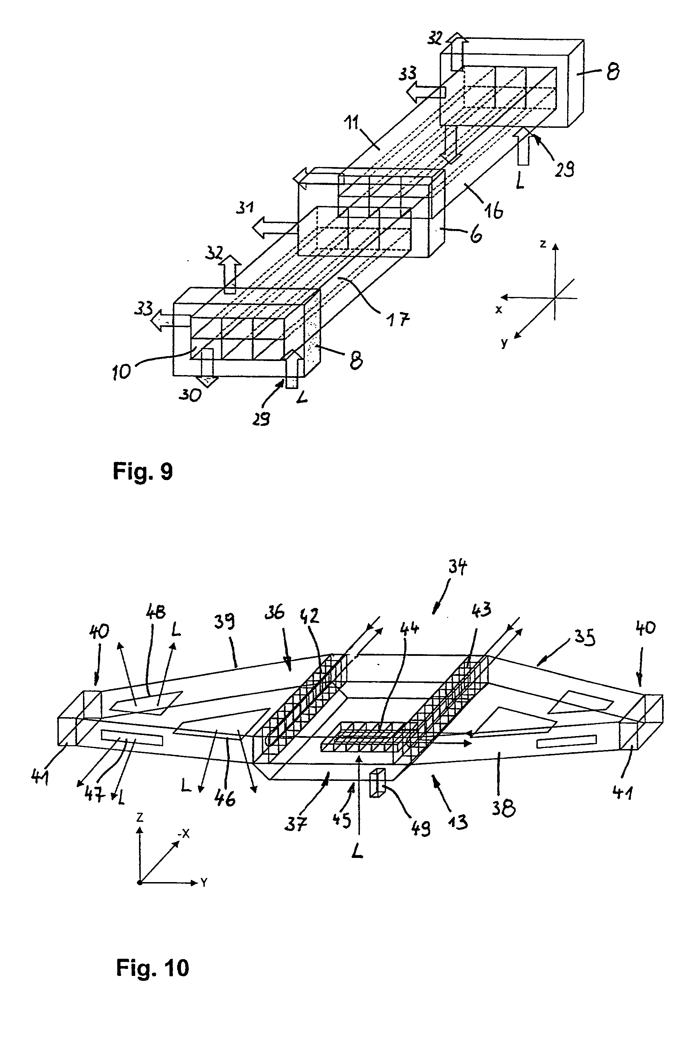

Der Strömungsverlauf der Luft L in einem Längenabschnitt 4, 5 des Tragprofils 2 auf der Fahrer- bzw. Beifahrerseite ist prinzipiell anhand der Figuren 8 und 9 zu erkennen. Die Luft L tritt über Lufteinlässe 29 in die Luftführung 3 ein. Man erkennt, dass der Luftstrom L innerhalb der Luftführung 3 in den neben- und übereinander liegenden Luftkanälen 10, 11; 16, 17 mehrfach umgelenkt und in verschiedenen Höhen und Vertikalebenen verläuft. Luftauslässe 30, 31; 32, 33 sind für den Fußraum, die Mannanströmer, die Frontscheibe und die Seitendefrostung vorgesehen (siehe hierzu Figur 9).

Anhand der Figur 10 erkennt man einen Instrumententafelträger 34, bei dem das Tragprofil 35 mit integrierter Luftführung 36 ein kompaktes Mittelteil 37 umfasst, an das sich zu beiden Seiten hin trapezförmig ausgestaltete Längenabschnitte 38, 39 angliedern. An den freien Enden 40 der Längenabschnitte 38, 39 sind die A-Säulenhalter 41 angeordnet. Im Mittelteil 37 sind zwei Wärmetauscher 42, 43 der Heizung sowie ein Wärmetauscher 44 der Kühlung integriert. Die Wärmetauscher 42-44 sind Bestandteil der Klimaanlage 13 des Personenkraftwagens. Das Tragprofil 35 kann in Pressschalenbauweise oder als ein- oder mehrteiliges Strangpressprofil ausgeführt sein. Durch einen zentralen Lufteinlass 45 wird Luft angesaugt und über die Wärmetauscher 42, 43 bzw. 44 geleitet. Über das Mittelteil 37 wird die Luft in der Luftführung 36 in die Längenabschnitte 38 bzw. 39 zur Fahrer- und Beifahrerseite hin umgeleitet. Hier sind Luftauslässe 46-48 für den Fußraum, den Mannanströmer sowie die Frontscheibe und Seitendefrostung vorgesehen. Je nach Betriebsweise wird die Luftklimatisierung (Heizung, Kühlung) unabhängig von äußeren Einflüssen hergestellt und aufrecht erhalten.

Zur Ableitung des im Betrieb anfallenden Kondenswassers ist der Luftführung 36 im Mittelteil 37 ein Kondensatablass 49 zugeordnet.

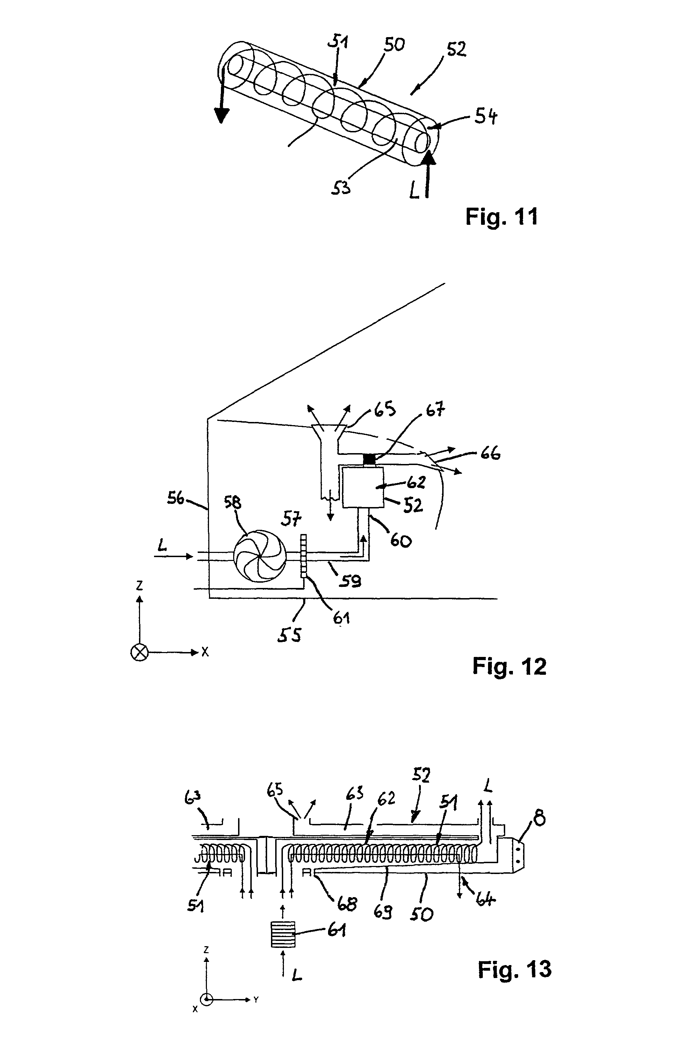

Einen Ausschnitt aus einem Tragprofil 50 mit integrierter Luftführung 51 einer weiteren Ausführungsform eines Instrumententafelträgers 52 zeigt Figur 11.

In die Luftführung 51 ist zentral eine Wärmetauscherleitung 53 eingegliedert. Durch hier nur angedeutete Mittel 54 zur Erzeugung eines wendelförmigen Luftstroms wird die Luft L in einem Wirbel um die Wärmetauscherleitung 53 geführt. Dieses Konzept gewährleistet einen verlängerten Luftweg der Luft in der Luftführung, wodurch eine höhere Kontaktfläche und Kontaktzeit mit der Wärmetauscherleitung 53 und damit ein verbesserter Wärmeaustausch gewährleistet ist. Auch bei dieser Ausführungsform ist es grundsätzlich möglich, die Wärmetauscherleitung 53 mit oberflächenvergrößernden Wärmetauscherflächen zu versehen.

In den Darstellungen gemäß den Figuren 12 und 13 ist mit 55 die Bodengruppe und mit 56 die Stirnwand des Fußraums 57 bezeichnet. Luft L wird über einen Ventilator 58 angesaugt und gelangt über die Leitung 59 bzw. den Lufteinlass 60 in den Instrumententafelträger 52. In die Leitung 59 ist ein erster Wärmetauscher 61 integriert. Dieser Wärmetauscher 61 dient beispielsweise zu Heizzwecken. Im Instrumententafelträger 52 selbst ist ein zweiter Wärmetauscher 62 integriert, und zwar in Form der gemäß Figur 11 erläuterten Wärmetauscherleitung 53, durch die ein Kältemittel fließt. Bei abgeschaltetem Wärmetauscher 61 wird über den Wärmetauscher 62 in der Luftführung 51 eine Kühlung der Luft L realisiert. Von der Luftführung 51 des Instrumententafelträgers 52 gelangt die klimatisierte Luft L über entsprechende Luftkanäle 63 und Luftauslässe 64-67 in den Fußraum, zur Frontscheibe, den Mannanströmer und die Seitendefrostung.

Etwa im tiefsten Bereich der Luftführung 51 ist ein Kondensatablauf 68 vorgesehen. Der Zulauf des Kondenswassers zum Kondensatablauf 68 wird über eine schräg ausgebildete Bodenflächen 69 der Luftführung 51 unterstützt.

### Bezugszeichenaufstellung

- 1 -: Instrumententafelträger
- 2 -: Tragprofil
- 3 -: Luftführung
- 4 -: Längenabschnitt
- 5 -: Längenabschnitt
- 6 -: Kopplungsstück
- 7 -: Ende
- 8 -: A-Säulenhalter
- 9 -: Lufteinlass
- 10 -: Längskanal
- 11 -: Längskanal
- 12 -: Fahrzeuginnenraum
- 13 -: Wärmetauscher
- 14 -: Wärmetauscherleitung
- 15 -: Wärmetauscherleitung
- 16 -: Längskanal
- 17 -: Längskanal
- 18 -: Oberfläche v. 14, 15
- 19 -: Wärmetauscherfläche
- 20 -: Längsrippe/Lamelle
- 21 -: Wärmetauscherleitung
- 22 -: Wärmetauscherleitung
- 23 -: Trennwand
- 24 -: Rippe
- 25 -: Innenwand
- 26 -: Verteilerraum
- 27 -: Haltesteg
- 28 -: Dichtung
- 29 -: Lufteinlass
- 30 -: Luftauslass
- 31 -: Luftauslass
- 32 -: Luftauslass
- 33 -: Luftauslass
- 34 -: Instrumententafelträger
- 35 -: Tragprofil
- 36 -: Luftführung
- 37 -: Mittelteil
- 38 -: Längenabschnitt
- 39 -: Längenabschnitt
- 40 -: Ende v. 38 bzw. 39
- 41 -: A-Säulenhalter
- 42 -: Wärmetauscher
- 43 -: Wärmetauscher
- 44 -: Wärmetauscher
- 45 -: Lufteinlass
- 46 -: Luftauslass
- 47 -: Luftauslass
- 48 -: Luftauslass
- 49 -: Kondensatfluss
- 50 -: Tragprofil
- 51 -: Luftführung
- 52 -: Instrumententafelträger
- 53 -: Wärmetauscherleitung
- 54 -: Mittel zur Lufteirbelung
- 55 -: Bodengruppe
- 56 -: Stimwand
- 57 -: Fußraum
- 58 -: Ventilator
- 59 -: Leitung
- 60 -: Lufteinlass
- 61 -: Wärmetauscher
- 62 -: Wärmetauscher
- 63 -: Luftkanal
- 64 -: Luftauslass
- 65 -: Luftauslass
- 66 -: Luftauslass
- 67 -: Luftauslass
- 68 -: Kondensatablauf
- 69 -: Bodenfläche

- L -: Luft

## Patentansprüche

1. Instrumententafelträger, der sich zwischen den A-Säulen eines Personenkraftwagens erstreckt, umfassend ein Tragprofil (2, 35, 50) mit integrierter Luftführung (3, 36, 51), wobei das Tragprofil (2, 35, 50) wenigstens einen Lufteinlass (9, 29, 45, 60) und wenigstens einen Luftauslass (30-33; 46-48; 64-67) aufweist und die Luftführung (3, 36, 51) zumindest einen Teil des Wärmetauschers (13; 42-44; 62) der Klimaanlage des Personenkraftwagens bildet, **dadurch gekennzeichnet, dass** in die Luftführung (3, 36, 51) wenigstens eine ein Wärmetauschermedium führende Wärmetauscherleitung ( 14, 15; 21, 22; 53) eingegliedert ist.

2. Instrumententafelträger nach Anspruch 1, **dadurch gekennzeichnet, dass** die Lüftführung (3, 36, 51) in mehrere Längskanäle (10, 11; 16, 17) unterteilt ist, in welche Wärmetauscherleitungen (14, 15; 21, 22; 53) integriert sind.

3. Instrumententafelträger nach Anspruch 1 oder 2, **dadurch gekennzeichnet, dass** jede Wärmetauscherleitung (14, 15; 21, 22) mit ihre Oberfläche vergrößernden Wärmetauscherflächen (19, 24) versehen ist.

4. Instrumententafelträger nach einem der Ansprüche 1 bis 3, **dadurch gekennzeichnet, dass** das Tragprofil (2, 35, 52) in zwei Längenabschnitte (4, 5; 38, 39) unterteilt ist, die durch ein Kopplungsstück (6, 37) miteinander verbunden sind.

5. Instrumententafelträger nach einem der Ansprüche 1 bis 4, **dadurch gekennzeichnet, dass** das Tragprofil (2, 35, 50) mit den A-Säulen relativbewegbar gekoppelt ist.

6. Instrumententafelträger nach einem der Ansprüche 1 bis 5, **dadurch gekennzeichnet, dass** das Tragprofil (2, 35, 50) mit seinen Enden (7) unter Eingliederung von Dichtungen (28) in A-Säulenhaltern (8) relativ bewegbar lageorientiert ist.

7. Instrumententafelträger nach einem der Ansprüche 1 bis 6, **dadurch gekennzeichnet, dass** der Luftführung (51) Mittel (54) zur Erzeugung eines wendelförmigen Luftstroms (L) um die Wärmetauscherleitung (53) zugeordnet sind.

8. Instrumententafelträger nach einem der Ansprüche 1 bis 7, **dadurch gekennzeichnet, dass** der Luftführung (3, 36, 51) ein Kondensatablauf (49, 68) zugeordnet ist.

## Claims

1. An instrument panel support, which extends between the A-columns of a motor vehicle, comprising a support profile (2, 35, 50) with an integrated air guidance system (3, 36, 51), the support profile (2, 35, 50) comprising at least one air inlet (9, 29, 45, 60) and at least one air outlet (30 - 33; 46 - 48; 64 - 67) and the air guidance system (3, 36, 51) forms at least part of the heat exchanger (13; 42 - 44; 62) of the motor vehicle air conditioning system, **characterised in that** at least one heat exchanger conduit (14, 15; 21, 22; 53) carrying a heat exchanger medium is incorporated in the air guidance system (3, 36, 51).

2. An instrument panel support according to claim 1, **characterised in that** the air guidance system (3, 36, 51) is subdivided into a plurality of longitudinal ducts (10, 11; 16, 17) in which heat exchanger conduits (14, 15; 21, 22; 53) are integrated.

3. An instrument panel support according to claim 1 or 2, **characterised in that** each heat exchanger conduit (14, 15; 21, 22) is provided with heat exchanger surfaces (19, 24) which increase its surface area.

4. An instrument panel according to any one of claims 1 to 3, **characterised in that** the support profile (2, 35, 52) is subdivided into two length portions (4, 5; 38, 39) interconnected by a coupling member (6, 37).

5. An instrument panel according to any one of claims 1 to 4, **characterised in that** the support profile (2, 35, 50) is coupled to the A-columns so as to be relatively movable.

6. An instrument panel according to any one of claims 1 to 5, **characterised in that** the support profile (2, 35, 50) is positionally oriented so as to be relatively movable with its ends (7) in A-column holders (8), seals (28) being incorporated.

7. An instrument panel according to any one of claims 1 to 6, **characterised in that** the air guidance system (51) has associated means (54) for producing a helical air flow (L) around the heat exchanger conduit (53).

8. An instrument panel according to any one of claims 1 to 7, **characterised in that** the air guidance system (3, 36, 51) has an associated condensate outlet (49, 68).

## Revendications

1. Support de tableau de bord, qui s'étend entre les montants A d'une voiture de tourisme, comprenant un profilé de support (2, 35, 50) comportant un système intégré (3, 36, 51) de guidage de l'air, le profilé de support (3, 35, 50) comportant au moins une entrée pour l'air (9, 29, 45, 60) et au moins une sortie pour l'air (30-33; 46-48; 64-67) et le système (3, 36, 51) de guidage de l'air formant au moins une partie de l'échangeur de chaleur (13; 42-42; 62) de l'installation de climatisation de la voiture de tourisme, **caractérisé en ce qu'**au moins une canalisation (14, 15; 21, 22; 53) de l'échangeur de chaleur, qui guide un fluide d'échange thermique, est intégré dans le système (3, 36, 51) de guidage de l'air.

2. Support de tableau de bord selon la revendication 1, **caractérisé en ce que** le système (3, 36, 51) de guidage de l'air est divisé en plusieurs canaux longitudinaux (10, 11, 17), dans lesquels sont intégrées des canalisations (14, 15; 21, 22; 53) de l'échangeur de chaleur.

3. Support de tableau de bord selon la revendication 1 ou 2, **caractérisé en ce que** chaque canalisation (14, 15, 21, 22) de l'échangeur de chaleur est pourvu de surfaces d'échange thermique (19, 24) qui augmentent la surface de la canalisation.

4. Support de tableau de bord selon l'une des revendications 1 à 3, **caractérisé en ce que** le profilé de support (2, 35, 52) est subdivisé en deux tronçons longitudinaux (4, 5; 38, 39), qui sont reliés entre eux par un élément de couplage (6, 37).

5. Support de tableau de bord selon l'une des revendications 1 à 4, **caractérisé en ce que** le profilé de support (2, 35, 50) est couplé, avec une possibilité de déplacement relatif, aux montants A.

6. Support de tableau de bord selon l'une des revendications 1 à 5, **caractérisé en ce que** le profilé de support (2, 35, 50) est orienté de manière à être déplaçable de façon relative avec ses extrémités 7 moyennant l'incorporation de garnitures d'étanchéité (28) dans des supports (8) des montants A.

7. Support de tableau de bord selon l'une des revendications 1 à 6, **caractérisé en ce qu'**au système (51) de guidage de l'air sont associés des moyens (54) servant à produire un courant d'air de forme hélicoïdale (L) autour de la canalisation (53) de l'échangeur de chaleur.

8. Support de tableau de bord selon l'une des revendications 1 à 7, **caractérisé en ce qu'**au système (3, 36, 51) de guidage de l'air est associée une sortie (49, 68) pour le condensat.
